(19) **Europäisches Patentamt**

**European Patent Office**

**Office européen des brevets**

(11) **EP 0 846 847 B1**

(12) **EUROPEAN PATENT SPECIFICATION**

(45) Date of publication and mention
of the grant of the patent:
**28.02.2001 Bulletin 2001/09**

(51) Int Cl.$^7$: **F01M 13/04**, F02M 25/08

(21) Application number: **97111253.7**

(22) Date of filing: **04.07.1997**

(54) **Apparatus for combustion enhancing and method**

Vorrichtung und Verfahren zur Verbesserung der Brennung

Dispositif et méthode pour améliorer la combustion

(84) Designated Contracting States:
**AT BE CH DE DK ES FR GB GR IT LI NL SE**

(30) Priority: **09.12.1996 WOPCT/SG96/00022**

(43) Date of publication of application:
**10.06.1998 Bulletin 1998/24**

(73) Proprietors:
- **Hideaki, Watase**
  **Singapore 556114 (SG)**
- **Vallejos, Dalupan Romulo**
  **Pasay City 1300 (PH)**
- **Lay, Tan Siew**
  **Singapore 470131 (SG)**

(72) Inventors:
- **Hideaki, Watase**
  **Singapore 556114 (SG)**
- **Vallejos, Dalupan Romulo**
  **Pasay City 1300 (PH)**
- **Lay, Tan Siew**
  **Singapore 470131 (SG)**

(74) Representative:
**RACKETTE Partnerschaft Patentanwälte**
**Postfach 13 10**
**79013 Freiburg (DE)**

(56) References cited:
**EP-A- 0 601 683**   **DE-A- 4 312 720**
**US-A- 3 172 348**   **US-A- 3 517 654**
**US-A- 3 557 763**   **US-A- 3 675 634**
**US-A- 4 269 607**

**Description**

*FIELD OF INVENTION*

The present invention relates to an apparatus according to the preamble of claim 1 as well as a method according to the preamble of claim 19 in order to improve engine efficiency and in particular the improvement of the ratio of mass of air to mass of fuel, combustion thermal efficiency and reduction of carbon deposits accumulation in the combustion systems of diesel, petrol and propane internal combustion engines.

This invention makes use of recovered hydrocarbon gas vapors vented from the fuel tank and blow-by hydrocarbons with hydrogen gas vapors vented from the positive crankcase ventilation system of an engine.

These vented hydrocarbon gas vapors are mixed with air and passed into a liquid mixture in the apparatus, dissociating the molecular chain of hydrocarbon gas vapors into methane and ethane gas vapors with oxygen. After being bubbled out they pass through a negative ionization process.

These newly produced gas vapors of the apparatus called negatively charged pre-oxidized hydrocarbon gas vapors are then fed through the air induction system of an internal combustion engine to improve the ratio of mass of air to mass of fuel.

*BACKGROUND OF THE INVENTION*

The EP 0 601 683 A1 discloses an apparatus according to the preamble of claim 1. The known apparatus is adapted for the treatment of gases in a positive crankcase ventilation system of an internal combustion engine and is provided with a housing defining a gas treatment chamber. Gas filtering media is passed through the chamber and the gases from the engine crankcase are passed throughout the gas filtering media in the chamber, before the gases are routed into the air intake portion of the engine. The apparatus also comprises a negative ion emitter, which has probes projecting into the chamber. The known apparatus is effective in improving the efficiency of an internal combustion engine due to the recirculation of crankcase fumes back to the intake side of an internal combustion engine. However it is desirable to still further improve the benefits achieved by recirculating gases involved in the operation of an internal combustion engine.

Internal combustion engines are used to convert the chemical energy of fuel into heat energy and then convert this heat energy into usable mechanical energy. This is achieved by combining the appropriate amounts of air and fuel and burning the mixture in an enclosed cylinder at a controlled rate.

An average air/fuel ratio of good combustion for a petrol engine is about 15 parts of air to 1 part of fuel by weight. Diesel engines operate on a much wider air/fuel ratio, since air intake is not regulated on most diesel engines. The ratio may range from about 20:1 to about 100:1. This fact, plus the high compression of the diesel engine, makes it a fuel efficient engine.

But the ratio of oxygen can become insufficient due to different kinds of fuel grades and the quality of oxygen entering into the engine. These are some factors that affect energy loss of an internal combustion engine.

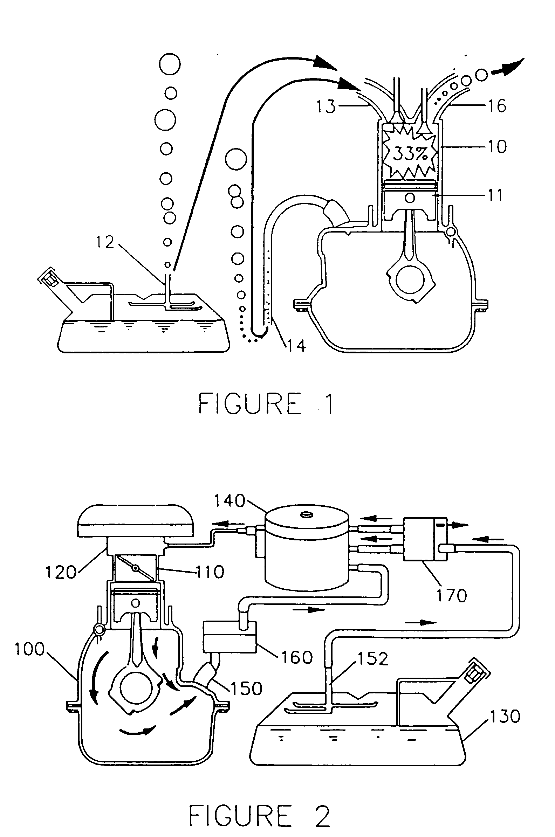

As illustrated in Figure 1 the efficiency of an existing internal combustion engine in converting the potential energy in fuel to mechanical energy is only about 33%. Of the available fuel energy in an engine, about one third is lost due to the following factors.

The main factor is pyrolysis, which is caused by the mixing of undesirable gas compounds with hydrocarbon gas vapors vented out from the positive crankcase vent and the fuel tank vent connected to the air induction system 13 of an engine. The mixing of undesirable gas compounds upsets the quality of oxygen to the combustion process.

The other factor is the loss of hydrocarbon gas vapors vented out into the atmosphere from the fuel tank 12 and the positive crankcase vent 14. These factors contribute to the loss of energy and the imbalance of the air to fuel ratio. The remaining one third energy loss of hydrocarbon gas vapors is the emission of unburned hydrocarbons through the exhaust system 16. These combustion conditions result in poor combustion.

Accordingly, it is desirable to provide an apparatus to produce negatively charged pre-oxidized hydrocarbon gas vapors to combine with the air and fuel mixture in the combustion chamber to improve the ratio of mass of air to mass of fuel in order to enhance combustion of an internal combustion engine.

In addition, the ambient air ($N+O_2$) with the negatively charged pre-oxidized hydrocarbon gas vapors ($HC + 0-_2$) mixed with the vaporized fuel in the combustion chambers contains more oxygen, thus creating greater expansion of the pistons during the combustion process. After the combustion the exhaust emission contains lower counts of hydrocarbons(<HC), lower carbon monoxide (<CO), lower oxide of nitrogen (<NOx), lower carbon particulates (<CP) with compound gas elements composed of carbon dioxide ($CO_2$), nitrogen dioxide ($NO_2$), sulfur dioxide (S02)and extra oxygen ($O_2$)

Here is the equation that shows what happens after the combustion in an engine with the apparatus.

$$HC + N + O_2 + (HC + O{\text{-}}_2) \rightarrow$$

$$<HC + <CO + <NO + <CP + CO_2 + H_2O + SO_2 + O_2$$

The first objective of this invention is to provide an apparatus to recover normally lost hydrocarbon gas vapor vented out into the atmosphere.

The second objective is to pass the recovered hydrocarbon gas vapors through the liquid mixture in the apparatus to form ethane and methane gases associated with oxygen.

The third objective is the process of dissociation of hydrocarbon gas vapors in the liquid mixture with the use of an impeller, resulting in venting out of the high octane vapors from the liquid solution.

The fourth objective is the process of increasing the oxygen ratio by adding negatively charged pre-oxidized hydrocarbons to the air flowing through the induction system of an engine.

The fifth objective is to make improvements by providing negatively charged pre-oxidized hydrocarbon gas vapors, to produce high expansion of pistons, to increase the engine power, to save fuel consumption, to reduce the emission of hydrocarbon gas vapors and to achieve higher efficiency of engine performance.

The sixth objective is to improve the thermal efficiency of an engine by adding negatively charged oxygen into the combustion chamber of an engine, thus causing lower amounts of oxides of nitrogen.

These and other objects of the invention will become apparent in the light of the accompanying specification, claims, and drawings.

### SUMMARY OF THE INVENTION

According to the invention, there is provided an apparatus with the features of claim 1 and a method according the features of claim 19.

In use the apparatus produces negatively charged pre-oxidized hydrocarbon gas vapors and comprises two gas inlets, a first connected to an engine crankcase vent and a second connected to a fuel tank vent. There also is one air inlet and one air outlet to the air induction system. A means is provided for mixing hydrocarbon gas vapors from the first and second gas inlets with a mixture of distilled or filtered water, alcohol and turpentine solution to form a gaseous mixture. The apparatus preferably comprises a double or several ionizer circuits having two sets of output paralleled electrode pins, negative direct current output power ranging from 6000 -v.d.c. to 15000 -v.d.c. or higher for negatively charging the gaseous mixture;

Preferably the alcohol solution is ethanol with a concentration in the range 5% to 30%, turpentine about 5% mixed with distilled or filtered water.

Preferably the mixing means comprises an impeller mixing chamber or several chambers to which the inlets are connected and includes means for mixing the vented gases of hydrocarbon with radical hydrogen and air with the liquid mixture and means for bubbling the vented gases through liquid mixture.

The apparatus further includes a divided charcoal canister, a half portion for absorbing vented hydrocarbon gas vapors and ambient air, connected to the fuel tank vent, which are drawn by vacuum effect by the air induction system and a half for air pressure release of the apparatus;

One feature of a preferred embodiment of the invention is an oil separator filter for trapping oil residue which allows the oil to return back to the engine crankcase source and allowing only the passage of hydrocarbon gas vapors and radical hydrogen gases from the outlet of the engine crankcase vent.

### BRIEF DESCRIPTION OF DRAWINGS

An embodiment of the invention will now be described by way of example, with reference to the accompanying drawings, in which:

Figure 1 is an illustration of the energy loss in a typical combustion engine.

Figure 2 is a schematic diagram of the apparatus being an embodiment of the invention.

Figure 3 is a part sectional perspective view of the apparatus of Figure 2.

Figure 4 is a sectional perspective view of the charcoal canister of the embodiment of Figure 2.

Figure 5 is a sectional view of an oil separator filter of the embodiment of Figure 2.

### DETAILED DESCRIPTION OF THE PREFERRED EMBODIMENT

An embodiment of the invention is schematically shown in Figure 2 in which an internal combustion engine 100 is provided with a carburetor 110 for combining air from an air intake 120 and fuel from fuel tank 130 and providing the mixture to the cylinders of the engine 100 for combustion.

Blow-by gases from the engine crankcase are vented under positive crankcase pressure through engine crankcase opening 150 and petrol vapor gases are vented from petrol tank 130 through opening 152. The blow-by gases are fed via an oil separator filter 160 and the petrol tank gases are fed via a charcoal canister 170 to the apparatus 140, being an embodiment of the invention.

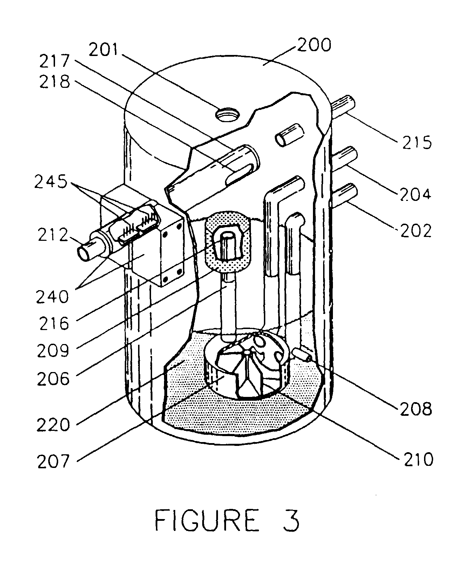

Figure 3 shows the apparatus 140 in more detail.

The apparatus 140 illustrated in Figure 2 and Figure 3 comprises a casing 200 provided with an opening 201 for filling a liquid solution 220. A first inlet 202 of the apparatus 140 is connected to an oil separator filter 160 and the positive crankcase ventilation system outlet 150. A second inlet 204 is connected to an outlet of the charcoal canister 170. A third inlet 215 of the apparatus 140 is connected to a further outlet of the charcoal canister 170. The outlet 212 of the apparatus 140 is connected to the air induction system 110 of the engine.

The inlets 202 and 204 are fed into a mixing chamber 207 provided with a mechanical driven impeller 210. The first inlet 202 supplies the radical hydrogen and hydrocarbon gases from the positive crankcase ventilation system outlet 150 through the oil separator filter 160. The second inlet 204 is a connection for introducing hydrocarbon gas and air to be mixed within the mixing chamber 207.

The liquid solution 220 is drawn into the impeller chamber inlet 208. The inlet 204 through which hydrocarbon gases and an air mixture are introduced is connected to the fuel evaporation outlet 152. The inlet 215 draws ambient air which is mixed with the gas mixture and acts as an air high pressure release of the apparatus connected to the charcoal canister 170. The impeller mixing chamber outlet tube 206 is placed in a vertical position for disposing the liquid solution through an opening 216. Liquid solution can overflow through a filter 209 and then is recycled back to the inlet 208. The gas mixture is introduced through an opening 218. The mixture flows through a tubular channel 217, which acts to guide the flow of gases to the outlet 212.

Within the tubular channel 217 are two sets of parallel electrode pins 245. The two ionizer circuits 240 use the process of negative ionization to ionize or influence negative electrons to the gas mixtures. The final product of the apparatus 200 with the negatively charged pre-oxidized hydrocarbon gas vapors is then fed to the inlet of the air induction system 110. These gas vapors improve the ratio of mass of air to mass of fuel. The results are improved fuel consumption and at the same time increased engine power of the internal combustion engine 100.

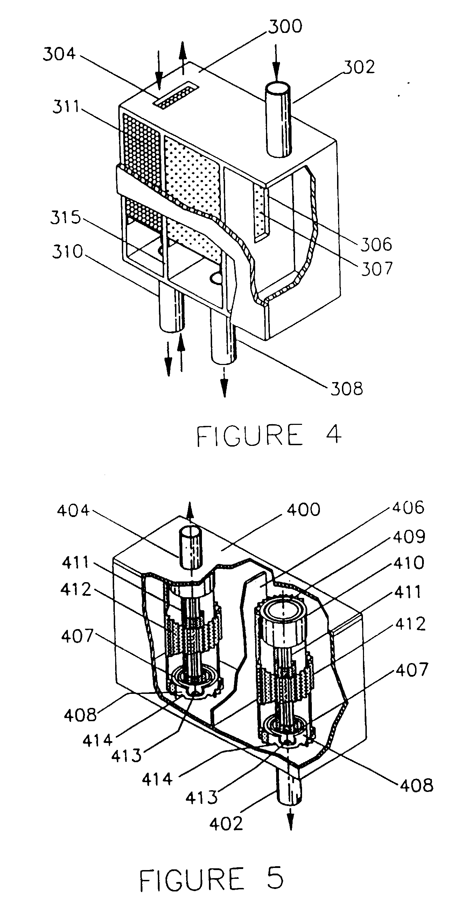

The carbon canister 170 is illustrated in Figure 4 and comprises a housing 300 having an inlet pipe 302 and output pipe 308. The pipe 302 connects to an inlet channel 306 adjacent absorbing element 307 comprised of pressed charcoal which on the downstream side is provided with an outlet channel 308 leading to pipe 204 of the apparatus 200. An air inlet 304 is provided at the opposed end of the channel 310. Volatile hydrocarbon gas vapors which evaporate from the fuel tank vent are fed through to the inlet 302. These hydrocarbon gas vapors are absorbed and lightly held by the charcoal absorbing element 307. When the engine starts, the hydrocarbon gas vapors are drawn through opening 308 and air flows through channel 304. Since the hydrocarbon gases are lightly held in the charcoal, they are drawn out by the vacuum pressure to the second inlet 204. A coarse charcoal filter 311 is an air filter and hydrocarbon trapping element as well as an air high pressure release due to the path 304 in the housing 300 of the carbon canister 170. Both charcoal elements 307 and 311 are separated by a plate 315.

The oil separator filter 160 is shown in Figure 5. The oil separator filter comprises a housing 400 having a vapor inlet 402 and vapor outlet 404. A single plate deflector 406 divides two filter sets allowing gas to pass on the sides and top side of the said plate. Both filter sets have a lower primary circular shape filter holder 407 and a lower secondary filter holder 408 as well as an upper primary filter holder 409 and an upper secondary filter holder 410. A tubular shaped primary filter 411 and a secondary filter 412 on both filter sets absorb oil residue as oil proceeds towards the lower primary holder 413 and lower secondary holder 414 each having at least four oil passages. Most of the oil residues are drawn back to the engine 100 through pipe 402. Preferably 3M type P or oil fill paper material is used for these filters.

The vented gas vapor mixtures of blow-by hydrocarbon and radical hydrogen gases, fuel tank hydrocarbon gases and alcohol gas vapor are passed into the engine from the apparatus and are to some extent disassociated by the negative ionization process. In this way occurs the ionization of negatively charged pre-oxidized hydrocarbons comprised of negatively charged ionized oxygen, methane and ethane vapors which react with the air and fuel entering in the combustion chambers in view of a more efficient use of these blow-by and fuel tank gas vapors which otherwise were vented out into the atmosphere.

During tests it was observed that continuing use of the apparatus appears to remove carbon deposits from the engine thus having a carbon cleaning effect due to the excess of negatively charged oxygen. Accumulated carbon deposits are ignited throughout the combustion systems and eventually cleaning the combustion component surfaces. The oil separator filter 160 further traps oil residues from the positive crankcase ventilation and allows the flow of radical hydrogen and hydrocarbon gas vapors into the apparatus 140 while preventing oil residues from entering into the apparatus 140. Oil consumption is also reduced since the residual oil returns back into the engine.

The embodiment of the invention described is not to be construed as limitative. For example, although shown to be used with a carburetor intake system, the invention is equally useful with fuel injected petrol engines and other kinds of internal combustion engines such as diesel and propane engines. Although a solution of ethanol or methanol is used in the apparatus 140, other alcohol's may be used. Furthermore, although inlets from the engine crankcase and the petrol tank vent have been shown, the apparatus of the invention may be used with only one inlet from one or the other vent. The embodiment of Figure 3 has been shown with two electronic ionizers 240 .This is not to be construed as limitative, and any number of electronics ionizers may be employed, dependent upon the vented gas mixture flow rate. The mixing means mixes the gases with the alcohol solution 220 in the embodiment of Figure 3 by mixing the liquid mixture into contact with the gases with air by bubbling the gases through the solution. However, other mixing methods may be used, for example an ultrasonic spraying device may be used instead of the impeller mixing and a pulsating pump vibration mixing device may be used with the embodiment of Figure 3 to assist mixing of the gases with the solution.

Tests were conducted to evaluate the effect of a test device in accordance with the embodiment of the invention upon a diesel vehicle's performance in terms of smoke level, fuel consumption and power measurement.

For this purpose comparative tests were conducted whereby measurements of smoke level, fuel consumption and power measurement were carried out before and after the installation of the apparatus to a Mitsubishi Canter 1992 lorry pickup having a two liter fuel injected diesel engine and a Mitsubishi tour bus having an engine capacity of 3298cc.

**MEASUREMENT PROCEDURE (MITSUBISHI CANTER 1992 LORRY PICKUP)**

1. **Smoke Level**

The smoke levels were measured using a Hartridge Smoker.

2. **Fuel Consumption Measurement**

a. At the constant speed.

This test was carried out while the test vehicle was being driven on a chassis dynamometer simulating on-the-road driving condition. The amount of fuel consumed in 10 minutes was measured while the vehicle was being driven at the constant speed of 90 km/h.

b. At the medium and maximum load

This test was carried out while the test vehicle was being driven on a chassis dynamometer simulating on-the-road driving condition. The loads were applied to the test vehicle which for medium load was 0.67 kN and for maximum load was 1.33 kN. The amount of fuel consumed in 1 minute was measured while the vehicle was being driven at both loads (medium and maximum) at the speed of 20 km/h.

c. Power Measurement

The maximum power of the test vehicle was measured using a chassis dynamometer.

*EQUIPMENT*

1. Hartridge Smokemeter MK III.

2. PLU 401/108 Fuel Meterinq System.

3. MAHA Chassis Dynamometer.

*TEST PROCEDURE*

1. Carry out measurement tests on smoke level, fuel consumption and power measurement.

2. Install the device in the test vehicle as described.

3. Run for 200 km.

4. Repeat step 1.

**TEST RESULTS**

| 1. At the Constant Speed 90 km | | | | | | | |
|---|---|---|---|---|---|---|---|
| | | WITHOUT DEVICE | | | WITH DEVICE | | |
| Text Speed (km/h) | Sampling Time (min) | Fuel Consumed (litre) | Average (l/h) | Average (l/h) | Fuel Consumed (litre) | Average (l/h) | Average (l/h) |
| 90 | 10 | 1.3548 | 8.12 | 8.0730 | 1.3170 | 7.90 | 7.903 |
| | | 1.3348 | 8.01 | | 1.3168 | 7.90 | |
| | | 1.3486 | 8.09 | | 1.3185 | 7.91 | |
| | | - | - | | - | - | |

| 2 At Medium Load 0.67 kN | | | | | | | |
|---|---|---|---|---|---|---|---|
| | | WITHOUT DEVICE | | | WITH DEVICE | | |
| Text Speed (km/h) | Sampling Time (min) | Fuel Consumed (litre) | Average (l/h) | Average (l/h) | Fuel Consumed (litre) | Average (l/h) | Average (l/h) |
| 20 | 1 | 0.0740- | 4.40 | 4.342 | 0.0701 | 4.18 | 4.126 |
| | | 0.0725 | 4.31 | | 0.0690 | 4.10 | |
| | | 0.0715 | 4.27 | | 0.0677 | 4.04 | |
| | | 0.0729 | 4.35 | | 0.0694 | 4.14 | |
| | | 0.0734 | 4.38 | | 0.0698 | 4.17 | |

| 3. At Maximum Load 1.33 kN | | | | | | | |
|---|---|---|---|---|---|---|---|
| | | WITHOUT DEVICE | | | WITH DEVICE | | |
| Text Speed (km/h) | Sampling Time (min) | Fuel Consumed (litre) | Average (l/h) | Average (l/h) | Fuel Consumed (litre) | Average (l/h) | Average (l/h) |
| 20 | 1 | 0.0938 | 5.59 | 5.566 | 0.0870 | 5.18 | 5.200 |
| | | 0.0933 | 5.56 | | 0.0862 | 5.14 | |
| | | 0.0931 | 5.55 | | 0.0872 | 5.20 | |
| | | 0.0937 | 5.59 | | 0.0879 | 5.24 | |
| | | 0.0735 | 5.54 | | 0.0877 | 5.24 | |

## SUMMARY OF TEST RESULTS

| 4. Fuel consumption test at the constant speed | | | |
|---|---|---|---|
| TEST SPEED | WITHOUT DEVICE | WITH DEVICE | PERCENTAGE DIFFERENCE |
| 90 km/h | 8.97 L/100 km | 8.78 L/100 km | -2.12 % |

| 5. Fuel consumption test at the medium load 0.67kN | | | |
|---|---|---|---|
| TEST SPEED | WITHOUT DEVICE | WITH DEVICE | PERCENTAGE DIFFERENCE |
| 20 km/h | 21.71 L/100 km | 20.63 L/100 km | -4.97 % |

| 6. Fuel consumption test at the maximum load 1.33 kN | | | |
|---|---|---|---|
| TEST SPEED | WITHOUT DEVICE | WITH DEVICE | PERCENTAGE DIFFERENCE |
| 20 km/h | 27.83 L/100 km | 26.00 L/100 km | -6.58 % |

| 7. Smoke Level Test | | | |
|---|---|---|---|
| | WITHOUT DEVICE | WITH DEVICE | PERCENTAGE DIFFERENCE |
| SMOKE LEVEL (HS | 84 | 37 | -55.95 % |

| 8. Maximum Power Test | | | |
|---|---|---|---|
| | WITHOUT DEVICE | WITH DEVICE | PERCENTAGE DIFFERENCE |
| MAXIMUM POWER ( | 39 | 42 | +7.69 % |

## SUMMARY

1. Fuel consumption at the constant speed 90 km/h reduced by 2.12%.
2. Fuel consumption at the medium load 0.67 kN and the speed 20 km/h reduced by 4.97%.
3. Fuel consumption at the maximum load 1.33 kN and the speed 20 km/h reduced by 6.58%.
4. Smoke level reduced by 55.95%.
5. Maximum power increased by 7.69%.

## *METHOD OF TEST (MITSUBISHI TOUR BUS)*

A comparative study on the performance of the vehicle in terms of exhaust emission was conducted before and after the installation of the device. The emission test was carried out at the exhaust pipe and the Positive Crankcase Ventilation (PCV) while the engine was running at idle speed at 2000 rpm:

a) Before installation of the device

b) After installation of the device and a 509 km drive.

Ignition timing of the engine was adjusted by 3-5 degree (1/8 turn) advanced after the installation of the apparatus. This adjustment was said to be essential and was part of the application procedure for the device.

The gases emitted from the vehicle exhaust were sampled and analyzed for the following:

1. Carbon dioxide, Carbon monoxide and Hydrocarbons
   Horiba automotive emission analyzer

2. Nitrogen oxide as $NO_2$
United States Environmental Protection Agency Method 7.

## TEST RESULTS

| 1) At idle speed | | | | |
|---|---|---|---|---|
| Test Item | WITHOUT DEVICE | | WITH DEVICE | Effect of Device on gas emission |
| Sampling point | PCV | Exhaust | Exhaust | |
| Carbon dioxide ($CO_2$), % v/v | 0.14 | 3.00 | 2.06 | Reduced by 34.4% |
| Carbon monoxide (CO), % v/v | < 0.01 | 0.02 | 0.03 | No significant effect |
| Hydrocarbons (HCs), ppm | 63.2 | 24.3 | 20.8 | Reduced by 76.2% |
| Nitrogen oxide as $NO_2$, ppm | - | 84 | 46 | Reduced by 45.2% |

| 2) At high speed (about 2000 rpm) | | | | |
|---|---|---|---|---|
| Test Item | WITHOUT DEVICE | | WITH DEVICE | Effect of Device on gas emission |
| Sampling point | PCV | Exhaust | Exhaust | |
| Carbon dioxide ($CO_2$), % v.v | 0.23 | 3.70 | 2.46 | Reduced by 37.4% |
| Carbon monoxide (CO), % v/v | < 0.01 | 0.04 | 0.04 | No significant effect |
| Hydrocarbons (HCs), ppm | 60.3 | 26.3 | 17.2 | Reduced by 80.1% |
| Nitrogen oxide as $NO_2$, ppm | - | 116 | 46 | Reduced by 60.3% |

| 3) Smoke capacity test | | | |
|---|---|---|---|
| Test Item | WITHOUT DEVICE | WITH DEVICE | Effect of Device on gas emission |
| Smoke capacity, HSU | 90 | 34 | Reduced by 62.2% |

## Claims

1.  Apparatus for an internal combustion engine (100) comprising:

    a first gas inlet (202) connectable to an engine crankcase vent (150) to take hydrocarbon gases from the said crankcase,

    means for mixing (200) said hydrocarbon gases with a liquid (220),

    means to expel (218) the contents from the mixing means (200),

    an ionizer (240) to ionize the contents of the mixing means (200) to form negatively charged pre-oxidized hydrocarbon gas vapors and

    an outlet (212) connectable to the air induction system (110) of the engine (100),

    **characterized in that** the apparatus comprises a second gas inlet (204) connectable to a fuel tank vent (152) to take hydrocarbon gases from said tank (130) and a third gas inlet (215) for air, whereby said means for mixing (200) is adapted to mix hydrocarbons gas vapors from the first and second gas inlets (202, 204) and air from the third gas inlet (215) with a liquid mixture of water and alcohol.

2. Apparatus as claimed in Claim 1 further comprising a charcoal canister (170) having a gas inlet (302) connectable to the fuel tank vent (152) and outlet channels (308, 310) connectable to the second gas inlet (204) and the third gas inlet (215) of the mixing means.

3. Apparatus as claimed in Claim 1, wherein the mixing means (200) comprises means for spraying the gases into contact the liquid mixture (220).

4. Apparatus as claimed in Claim 1, wherein the mixing means (200) comprises an impeller (210) and a mixing chamber (207) in which the hydrocarbon gas vapors from the crankcase and fuel tank vent (152) with air are passed through the liquid mixture (220) then bubbled to vent the gas mixture.

5. Apparatus as claimed In Claim 4, wherein the mixing employs ultrasonic spraying device.

6. Apparatus as claimed in Claim 4, wherein the mixing means(200) comprises means for mixing the vented gases into contact with the liquid mixture by electronic motor driven mechanical impeller mixing device (210).

7. Apparatus as claimed in claim 4, wherein the mixing means (200) has an electronic or mechanical pump for pumping the solution through the impeller mixing chamber.

8. Apparatus as claimed in any one of the preceding claims, wherein the liquid mixture (220) has an alcohol concentration in the range 5% - 30% all organic and the balance being filtered or distilled water.

9. Apparatus as claim in any one of the claims 1 to 7, wherein the liquid mixture (220) has 2% to 15% turpentine and the balance being filtered or distilled water.

10. Apparatus as claimed in claim 2, wherein the charcoal canister (170) has two separated charcoal elements (307, 311) which absorb hydrocarbon gas vapors.

11. Apparatus as claimed in Claim 10, wherein the charcoal canister (170) has a first inlet connection (302) connectable to the fuel tank vent (152).

12. Apparatus as claimed in Claim 10, wherein the charcoal canister (170) has a second inlet (304) and a coarse charcoal element (311) effective for releasing air pressure and for filtering air for apparatus.

13. Apparatus as claimed in Claim 10, wherein the second charcoal element (307) includes fine charcoal for absorbing hydrocarbon gas vapors to be mixed with air.

14. Apparatus as claimed in Claim 1 further comprising an oil separator filter (160) connectable between the engine crankcase vent (150) and said first gas inlet (202).

15. Apparatus as claimed in Claim 14, wherein the separator includes an oil filter (160).

16. Apparatus as claimed in Claim 14 or Claim 15, wherein the separator includes means for trapping oil and carbon particles, and means of the oil returning back into the engine crankcase.

17. Apparatus as claimed in Claim 16, wherein the trapping means comprises a plurality of filter members forming a tortuous path for the gases.

18. Apparatus as claimed in any one of the preceding claims, wherein ionizer circuits (240) with parallel electrode pins (245) and an output power of 1000 negative volts to 30,000 negative volts are used for negative ionization to improve the fuel consumption, thermal efficiency and reduction of carbon deposits of an internal combustion engine (100).

19. A method to improve the ratio of mass of air to mass of fuel by;

taking vented hydrocarbon gas vapors from an engine crankcase,

mixing said gas vapors and ambient air with a liquid,

causing dissociation of molecular chains of hydrocarbon gas vapors,

expelling the dissociated molecular chains of hydrocarbon gas vapors from the liquid,

passing the said chains through an ionizer to form negatively charged pre-oxidized hydrocarbon gas vapors and

introducing said gas vapors into the air induction system of the internal combustion engine,

**characterized in that** the method further comprises the steps of

taking vented hydrocarbon gas vapors from a fuel tank,

taking ambient air from the atmosphere,

mixing the vented hydrocarbon gas vapors and ambient air with a liquid mixture of water and alcohol.

20. Method according to Claim 19, wherein the hydrocarbon gas vapors recovered from the fuel tank vent, from only the engine crankcase vent or only gas vapors from the fuel tank vent could be recovered into the apparatus to provide negatively charged pre-oxidized hydrocarbon gas vapors.

**Patentansprüche**

1. Vorrichtung für einen Verbrennungsmotor (100) mit

einem ersten Gaseinlass (202), der an eine Kurbelgehäuseentlüftung (150) des Motors anschliessbar ist, um kohlenwasserstoffhaltige Gase aus dem Kurbelgehäuse abzuführen,

Mittel zum Mischen (200) der kohlenwasserstoffhaltigen Gase mit einer Flüssigkeit (220),

Mittel zum Austreiben (218) der Fracht aus dem Mischmittel (200),

einer Ionisiereinheit (240) zur Ionisierung der Fracht des Mischmittels (200) zur Bildung von negativ geladenen voroxidierten kohlenwasserstoffhaltigen Gasdämpfen und

einem Auslaß (212), der an die Lufteinlasseinheit (110) des Motors (100) anschliessbar ist,

**dadurch gekennzeichnet,** dass die Vorrichtung einen zweiten Gaseinlass (204), der an eine Kraftstofftankentlüftung (152) zum Abführen von kohlenwasserstoffhaltigen Gasen aus dem Tank (130) anschliessbar ist, und einen dritten Gaseinlass (215) für Luft aufweist, wobei das Mischmittel (200) dazu eingerichtet ist, kohlenwasserstoffhaltige Gasdämpfe aus dem ersten und dem zweiten Gaseinlass (202, 204) und Luft aus dem dritten Gaseinlass (215) mit einer flüssigen Mischung aus Wasser und Alkohol zu mischen.

2. Vorrichtung nach Anspruch 1, die weiterhin einen Holzkohlebehälter (170) mit einem an die Kraftstofftankentlüftung (152) anschliessbaren Gaseinlass (302) und an den zweiten Gaseinlass (204) und den dritten Gaseinlass (215) des Mischmittels anschliessbare Auslassleitungen (308, 310) aufweist.

3. Vorrichtung nach Anspruch 1, bei der das Mischmittel (200) Mittel zum kontaktierenden Sprühen von Gasen in die flüssige Mischung (220) aufweist.

4. Vorrichtung nach Anspruch 1, bei der das Mischmittel (200) ein Flügelrad (210) und eine Mischkammer (207) aufweist, in der die kohlenwasserstoffhaltigen Gasdämpfe aus dem Kurbelgehäuse und der Kraftstofftankentlüftung (152) mit Luft durch die flüssige Mischung (220) durchgeleitet und zur Belüftung der Gasmischung hindurchgeperlt werden.

5. Vorrichtung nach Anspruch 4, bei der für die Mischung eine auf der Grundlage von Ultraschall arbeitende Sprühvorrichtung eingesetzt wird.

6. Vorrichtung nach Anspruch 4, bei der das Mischmittel (200) Mittel zur Beimischung der belüfteten Gase in die flüssige Mischung über eine durch einen Elektromotor mechanisch angetriebene Flügelradmischeinrichtung (210) aufweist.

7. Vorrichtung nach Anspruch 4, bei der das Mischmittel (200) über eine elektronische oder mechanische Pumpe zum Durchpumpen der Lösung durch die Flügelradmischkammer verfügt.

8. Vorrichtung nach einem der vorangehenden Ansprüche, bei der die flüssige Mischung (220) einen Alkoholanteil im Bereich von 5% - 30% der organischen Bestandteile aufweist und der verbleibende Anteil gefiltertes oder destilliertes Wasser ist.

9. Vorrichtung nach einem der Ansprüche 1 bis 7, bei der die flüssige Mischung (220) 2% bis 15% Terpentin aufweist und der verbleibende Anteil gefiltertes oder destilliertes Wasser ist.

10. Vorrichtung nach Anspruch 2, bei der der Holzkohlebehälter (170) zwei getrennte Holzkohleelemente (307, 311) aufweist, die kohlenwasserstoffhaltige Gasdämpfe absorbieren.

11. Vorrichtung nach Anspruch 10, bei der der Holzkohlebehälter (170) einen ersten Einlassanschluss (302) aufweist, der mit der Kraftstofftankentlüftung (152) verbindbar ist.

12. Vorrichtung nach Anspruch 10, bei der der Holzkohlebehälter (170) einen zweiten Einlass (304) und ein Holzkohleelement mit großen Stücken aufweist, das zum Abbau von Luftdruck und zur Luftfilterung für die Vorrichtung vorgesehen ist.

13. Vorrichtung nach Anspruch 10, bei der das zweite Holzkohleelement (307) Holzkohle in kleinen Stücken zur Absorption von mit Luft zu vermischenden kohlenwasserstoffhaltigen Gasdämpfen aufweist.

14. Vorrichtung nach Anspruch 1, die weiterhin einen Ölabscheidefilter (160) aufweist, der zwischen der Kurbelgehäuseentlüftung (150) des Motors und dem ersten Gaseinlass (202) anschliessbar ist.

15. Vorrichtung nach Anspruch 14, bei der der Abscheider einen Ölfilter (160) umfaßt.

16. Vorrichtung nach Anspruch 14 oder Anspruch 15, bei der der Abscheider ein Mittel zum Auffangen von Öl und Kohleteilchen sowie ein Mittel zur Rückführung des Öls in das Kurbelgehäuse des Motors umfaßt.

17. Vorrichtung nach Anspruch 16, bei der das Auffangmittel eine Anzahl von Filterteilen umfaßt, die für die Gase einen gewundenen Pfad bilden.

18. Vorrichtung nach einem der vorangehenden Ansprüche, bei der Ionisierschaltkreise mit parallelen Elektrodenstiften (245) und mit einer am Ausgang anliegenden negativen Spannung von 1000 Volt bis 30.000 Volt zur negativen Ionsisierung eingesetzt werden, um bei dem Verbrennungsmotor (100) den Kraftstoffverbrauch, den thermischen Wirkungsgrad und die Verringerung der Ablagerung kohlehaltiger Stoffe zu verbessern.

19. Verfahren zur Verbesserung des Verhältnisses von Luftmenge zu Kraftstoffmenge durch

Entnahme von belüfteten kohlenwasserstoffhaltigen Gasdämpfen aus einem Kurbelgehäuse eines Motors,

Mischen der Gasdämpfe und Umgebungsluft mit einer Flüssigkeit,

Generierung einer Dissoziation von Molekularketten von kohlenwasserstoffhaltigen Gasdämpfen,

Austreiben der dissoziierten Molekularketten der kohlenwasserstoffhaltigen Gasdämpfe aus der Flüssigkeit,

Durchleiten der Ketten durch eine Ionisiereinheit, um negativ geladene voroxidierte kohlenwasserstoffhaltige Gasdämpfe zu bilden und

Einführen der Gasdämpfe in die Lufteinlasseinheit des Verbrennungsmotors,

**dadurch gekennzeichnet, dass** das Verfahren weiterhin die Schritte der

Entnahme von belüfteten kohlenwasserstoffhaltigen Gasdämpfen aus einem Kraftstofftank,

Entnahme von Umgebungsluft aus der Atmosphäre,

Mischen der belüfteten kohlenwasserstoffhaltigen Gasdämpfe und Umgebungsluft mit einer flüssigen Mischung aus Wasser und Alkohol

aufweist.

20. Verfahren nach Anspruch 19, bei dem die von der Kraftstofftankentlüftung, lediglich von der Kurbelgehäuseentlüftung des Motors oder lediglich aus dem Kraftstofftank stammenden Gasdämpfe in die Vorrichtung rückgeführt werden können, um negativ geladene voroxidierte kohlenwasserstoffhaltige Gasdämpfe zu bilden.

## Revendications

1. Dispositif pour un moteur à combustion interne (100) comprenant :

   une première entrée de gaz (202) connectable à un évent de carter de moteur (150) pour extraire les vapeurs d'hydrocarbures dudit carter,
   des moyens de mélange (200) desdites vapeurs d'hydrocarbures avec un liquide (220),
   des moyens de rejet (218) du contenu des moyens de mélange (200),
   un ioniseur (240) pour ioniser le contenu des moyens de mélange (200) afin de produire des vapeurs d'hydrocarbures préoxydées chargées négativement, et
   une sortie (212) connectable au système d'admission d'air (110) du moteur (100),

   caractérisé en ce que le dispositif comprend :

   une deuxième entrée de gaz (204) connectable à un évent de réservoir de carburant (152) pour extraire les vapeurs d'hydrocarbures dudit réservoir (130), et
   une troisième entrée de gaz (215) pour l'air,
   de sorte que les dits moyens de mélange (200) sont prévus pour mélanger les vapeurs d'hydrocarbure venant des première et deuxième entrées de gaz (202, 204) et l'air venant de la troisième entrée de gaz (215) avec un mélange liquide d'eau et d'alcool.

2. Dispositif selon la revendication 1, comprenant en outre une cartouche de charbon actif (170) ayant une entrée de gaz (302) connectable à l'évent de réservoir de carburant (152) et des canaux de sortie (308, 310) connectables à la deuxième entrée de gaz (204) et à la troisième entrée de gaz (215) des moyens de mélange.

3. Dispositif selon la revendication 1, dans lequel les moyens de mélange (200) comprennent des moyens de dispersion des gaz pour mise en contact avec le mélange liquide (220).

4. Dispositif selon la revendication 1, dans lequel les moyens de mélange (200) comprennent un élément d'impulsion (210) et une chambre de mélange (207) dans laquelle les vapeurs d'hydrocarbures venant du carter et de l'évent de réservoir de carburant (152) ainsi que l'air traversent le mélange liquide (220) puis forment des bulles pour évacuer le mélange gazeux.

5. Dispositif selon la revendication 4, dans lequel le mélange est effectué par des moyens de dispersion par ultrasons.

6. Dispositif selon la revendication 4, dans lequel les moyens de mélange (200) comprennent des moyens pour mélanger les vapeurs d'évent en contact avec le mélange liquide à l'aide un élément d'impulsion mécanique entraîné par moteur électronique (210).

7.  Dispositif selon la revendication 4, dans lequel les moyens de mélange (200) comprennent une pompe électronique ou mécanique pour pomper la solution à travers la chambre de mélange à élément d'impulsion.

8.  Dispositif selon une quelconque des revendications précédentes, dans lequel le mélange liquide (220) a une concentration d'alcool comprise entre 5% et 30% entièrement organique, et le reste est de l'eau filtrée ou distillée.

9.  Dispositif selon une quelconque des revendications 1 à 7, dans lequel le mélange liquide (220) comprend de 2% à 15% de térébenthine, le reste étant de l'eau filtrée ou distillée.

10. Dispositif selon la revendication 2, dans lequel la cartouche de charbon actif (170) comprend deux éléments de charbon actif séparés (307, 311) qui absorbent les vapeurs d'hydrocarbures.

11. Dispositif selon la revendication 10, dans lequel la cartouche de charbon actif (170) comporte une première connexion d'entrée (302) connectable à l'évent de réservoir de carburant (152).

12. Dispositif selon la revendication 10, dans lequel la cartouche de charbon actif (170) comporte une deuxième entrée (304) et un élément de charbon actif grossier (311) qui sert à la décharge de la pression d'air et au filtrage de l'air pour le dispositif.

13. Dispositif selon la revendication 10, dans lequel le deuxième élément de charbon actif (307) comprend du charbon actif fin pour absorber les vapeurs d'hydrocarbures à mélanger avec l'air.

14. Dispositif selon la revendication 1, comprenant en outre un filtre séparateur d'huile (160) connectable entre l'évent de carter de moteur (150) et la dite première entrée de gaz (202).

15. Dispositif selon la revendication 14, dans lequel le séparateur comprend un filtre à huile (160).

16. Dispositif selon la revendication 14 ou la revendication 15, dans lequel le séparateur comprend des moyens de capture de l'huile et des particules de carbone et des moyens de renvoi de l'huile dans le carter du moteur.

17. Dispositif selon la revendication 16, dans lequel les moyens de capture comprennent une pluralité d'éléments filtrants formant un chemin tortueux pour les gaz.

18. Dispositif selon une quelconque des revendications précédentes, dans lequel des circuits d'ionisation (240) ayant des tiges d'électrodes parallèles (245) et une puissance de sortie de 1000 volts négatifs à 30 000 volts négatifs sont utilisés pour une ionisation négative afin d'améliorer la consommation de carburant, le rendement thermique et la réduction des dépôts de carbone d'un moteur à combustion interne (100).

19. Méthode d'amélioration du rapport de la masse d'air à la masse de carburant par :

    extraction des vapeurs d'hydrocarbures à l'évent d'un carter de moteur,
    mélange des dites vapeurs et d'air ambiant avec un liquide,
    dissociation des chaînes moléculaires des vapeurs d'hydrocarbures,
    rejet des chaînes moléculaires dissociées de vapeurs d'hydrocarbures à partir du liquide,
    passage des dites chaînes à travers un ioniseur pour former des vapeurs d'hydrocarbures préoxydées négativement chargées, et
    introduction des dites vapeurs dans le système d'admission d'air du moteur à combustion interne,

    caractérisée en ce que la méthode comprend en outre les étapes de :

    extraction des vapeurs d'hydrocarbures à l'évent d'un réservoir de carburant,
    prise d'air ambiant à partir de l'atmosphère, et
    mélange des vapeurs d'hydrocarbures d'évent et de l'air ambiant avec un mélange liquide d'eau et d'alcool.

20. Méthode selon la revendication 19, dans laquelle les vapeurs d'hydrocarbures récupérées en provenance de l'évent de réservoir de carburant, seulement de l'évent de carter de moteur ou seulement les vapeurs provenant de l'évent de réservoir de carburant peuvent être récupérées dans le dispositif pour produire des vapeurs d'hydrocarbures préoxydées négativement chargées.

FIGURE 1

FIGURE 2

FIGURE 3

FIGURE 4

FIGURE 5